## Europäisches Patentamt

## European Patent Office

## Office européen des brevets

(19)

(11) Veröffentlichungsnummer: **0 221 354 B1**

(12) **EUROPÄISCHE PATENTSCHRIFT**

(45) Veröffentlichungstag der Patentschrift:
23.08.89

(51) Int. Cl.⁴: **C02F 3/20, B01F 7/00**

(21) Anmeldenummer: 86113618.2

(22) Anmeldetag: 02.10.86

(54) Verfahren zum Betrieb eines Schraubenbelüfters für die Abwasserbegasung.

(30) Priorität: 31.10.85 DE 3538715

(43) Veröffentlichungstag der Anmeldung:
13.05.87 Patentblatt 87/20

(45) Bekanntmachung des Hinweises auf die Patenterteilung:
23.08.89 Patentblatt 89/34

(84) Benannte Vertragsstaaten:
AT BE CH DE ES FR GB GR IT LI LU NL SE

(56) Entgegenhaltungen:
CH-A- 599 807
DE-A- 2 837 388
DE-A- 3 208 025
US-A- 3 108 146

Die Akte enthält technische Angaben, die nach dem Eingang der Anmeldung eingereicht wurden und die nicht in dieser Patentschrift enthalten sind.

(73) Patentinhaber: Fuchs, Leonhard, Dipl.-Ing., Im Stocktal 2, D-5440 Mayen(DE)
Patentinhaber: Fuchs, Martin, Im Stocktal 2, D-5440 Mayen(DE)

(72) Erfinder: Fuchs, Leonhard, Dipl.-Ing., Im Stocktal 2, D-5440 Mayen(DE)
Erfinder: Fuchs, Martin, Im Stocktal 2, D-5440 Mayen(DE)

(74) Vertreter: Selting, Günther, Dipl.-Ing. et al, Deichmannhaus am Hauptbahnhof, D-5000 Köln 1(DE)

## Beschreibung

Bei der Abwasserreinigung ist es bekannt, Schraubenbelüfter einzusetzen, um Luft oder Sauerstoff in das Abwasser einzutragen. Der Schraubenbelüfter weist am Ende einer rotierenden Welle ein Mischorgan in Form eines mehrflügeligen Propellers, der auch als Wendel ausgebildet sein kann, auf. Das Mischorgan bewirkt eine starke Beschleunigung des Wassers schräg nach unten und eine Ansaugung von Luft durch die hohe Welle hindurch. Durch das rotierende Mischorgan wird die Luft feinblasig verteilt und ein Teil des Luftsauerstoffs geht in dem Abwasser in Lösung. Zur Erzielung einer großen Tiefenwirkung der Belüftung und einer großen Aufstiegshöhe für die Luftbläschen sollte das Mischorgan möglichst weit unter der Wasseroberfläche angeordnet werden. Dabei besteht aber die Schwierigkeit, daß beim Lufteintrag ein hoher Wasserdruck überwunden werden muß, wozu eine hohe Leistungsaufnahme des Motors des Schraubenlüfters erforderlich ist. Im allgemeinen beträgt der Lufteintrag weniger als 35 m³/kWh.

Es sind bereits Schraubenlüfter bekannt, bei denen dem zum Mischorgan führenden Luftkanal durch einen Niederdruckverdichter Druckluft zugeführt wird (DE-A 3 208 025). Der Überdruck gegenüber der Atmosphäre beträgt hierbei etwa 11,2 mbar. Durch den Überdruck soll eine größere Tiefenwirkung des Schraubenbelüfters erreicht werden. Ferner soll der Lufteintrag ber geringem Energieaufwand verbessert werden. Nach dieser Lehre wird die Luft mit geringem Überdruck zugeführt, um – bezogen auf das Mischorgan – tiefer in das Wasser eindringen zu können.

Bekannt ist ferner eine Mischvorrichtung für flüssige Medien (DE-U 7 411 389), bei der auf der das Mischorgan tragenden Welle innerhalb eines umhüllenden Mantels Flügel angebracht sind, die ein Axialgebläse bilden. Mit derartigen Flügeln kann nur ein geringer Luftdruck als Vordruck für die von dem Mischorgan anzusaugende Luft erzeugt werden. Außerdem ist zu berücksichtigen, daß die Drehzahl der Welle, die auf die Dichte des Wassers abgestimmt ist, viel zu gering ist, um mit den Flügeln einen Luftdruck aufzubauen.

Der Erfindung liegt die Aufgabe zugrunde, ein Verfahren der im Oberbegriff des Patentanspruchs 1 genannten Art zu schaffen, das bei geringem Energieaufwand einen hohen Sauerstoffeintrag in das Wasser ermöglicht.

Die Lösung dieser Aufgabe erfolgt erfindungsgemäß mit den Merkmalen des kennzeichnenden Teils des Patentanspruchs 1.

Bei dem erfindungsgemäßen Verfahren ist der Druck, den das Gebläse liefert, um etwa 0 bis 35 mbar niedriger als der Wasserdruck am Austrittende des Luftkanals. Obwohl das Mischorgan in relativ großer Tiefe angeordnet ist, dringt bei stillstehender Welle Wasser nur bis zu einer Höhe von 0 bis 35 cm in den Auslaß des Druckkanals ein. Wenn die Welle rotiert, wird durch das ebenfalls rotierende Mischorgan eine Sogwirkung ausgeübt, wodurch Luft angesaugt und in feinverteilter Bläschenform in das Wasser eingetragen wird. Der Druck, der durch das Gebläse erzeugt wird, ist in Abhängigkeit von der Tauchtiefe des Mischorgans derart bemessen, daß das Mischorgan einen relativ geringen Sog erzeugen muß, um die Luft aus dem Luftkanal abzuziehen. Hierzu ist vorzugsweise eine Wassersäule von 10 bis 35 cm Höhe zu überwinden. Bei dem erfindungsgemäßen Verfahren arbeitet der Schraubenbelüfter mit Druckluftzufuhr in größerer Wassertiefe im Prinzip unter gleichen Verhältnissen wie ein üblicher Schraubenlüfter (ohne Druckluftzufuhr), dessen Mischorgan an oder dicht unter der Wasseroberfläche angeordnet ist. Durch die größere Eintauchtiefe wird die Tiefenwirkung der Belüftung wesentlich verbessert. Untersuchungen haben gezeigt, daß pro Meter Aufstiegshöhe 7 bis 8% Sauerstoff im Wasser gelöst werden, wenn die Luftbläschen in feiner Verteilung vorliegen. Die Aufstiegshöhe kann durch eine große Eintauchtiefe des Mischorgans vergrößert werden, ohne daß die dem Motor zum Drehen der Welle abgeforderte Leistung spürbar erhöht wurde. Das Gebläse liefert je nach Eintauchtiefe des Mischorgans 10 bis 20% der Gesamtleistung. Das Gebläse hat einen wesentlich besseren Gasförderungswirkungsgrad als das rotierende Mischorgan, so daß der Gesamtwirkungsgrad des Schraubenbelüfters verbessert wird. Die Saugleistung des Mischorgans und der Vordruck des Gebläses sind unter Berücksichtigung der Eintauchtiefe des Mischorgans so abgestimmt, daß, bezogen auf die elektrische Leistungsaufnahme des Motors, ein Luftdurchsatz von mehr als 40 m³/kWh, vorzugsweise von 45 bis 70 m³/kWh gegeben ist.

Die Eintauchtiefe des Mischorgans beträgt vorzugsweise zwischen 50 und 120 cm, insbesondere zwischen 70 und 100 cm. Um diese Eintauchtiefe wird die Tiefenwirkung des Schraubenbelüfters, verglichen mit einem Schraubenbelüfter mit dicht unter der Oberfläche angeordnetem Mischorgan, vergrößert, ohne daß die Motorleistung erhöht werden müßte.

Zur Erzeugung der vorverdichteten Luft werden Hochdruckgebläse mit einer Drehzahl von über 3000 U/min oder mehrstufigen Radialgebläse eingesetzt. Axialgebläse eignen sich für die Erzeugung der benötigten relativ hohen Drücke von etwa 30 bis 100 mbar nicht.

Gemäß einer bevorzugten Ausführungsform der Erfindung ist die Welle mit radialem Abstand von einem Mantel umgeben, der unmittelbar vor dem Mischorgan endet und der an das Gebläse angeschlossen ist. In dem Mantel herrscht der von dem Gebläse erzeugte Druck, wodurch sich in dem Mantel eine ringförmige Luftsäule ausbildet, die das Aufsteigen von Wasser verhindert. Auf diese Weise entsteht eine pneumatische Abdichtung des Ringspaltes zwischen Welle und Mantel durch eine stehende Luftsäule. Die Luftzufuhr zum Mischorgan erfolgt durch die hohle Welle hindurch.

Die Welle des Schraubenbelüfters hat zum Flüssigkeitsspiegel eine Neigung von 35 bis 60°, vorzugsweise von 40 bis 50°. Diese relativ steile Anordnung der Welle hat zur Folge, daß der aus Wasser und Luftblasen bestehende Strahl tief in die Flüssigkeit hineinreicht. Außerdem kann die Welle bei dem über dem Wasserspiegel angeordneten Motor eine verhältnismäß geringe Länge haben.

Im folgenden werden unter Bezugnahme auf die Zeichnungen Ausführungsbeispiele der Erfindung näher erläutert.

Es zeigen:

Fig. 1 eine schematische Seitenansicht einer ersten Ausführungsform des Schraubenbelüfters, teilweise geschnitten,

Fig. 2 eine ähnliche Darstellung einer zweiten Ausführungsform,

Fig. 3 eine ähnliche Darstellung einer dritten Ausführungsform und

Fig. 4 eine Darstellung einer Ausführungsform mit Tauchmotor.

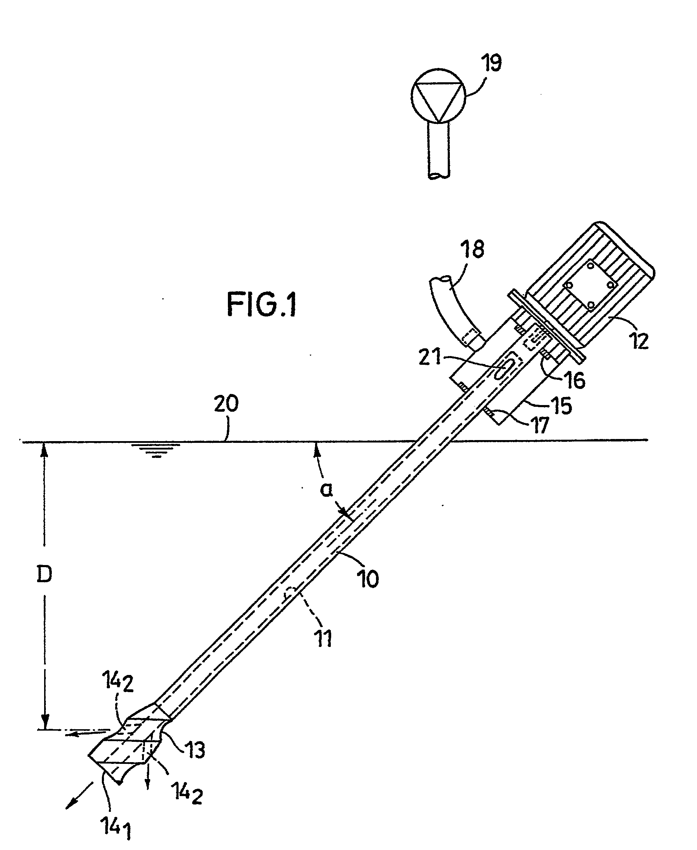

Bei dem Ausführungsbeispiel der Fig. 1 weist der Schraubenbelüfter eine hohle Welle 10 auf, durch die sich der Luftkanal 11 in axialer Richtung erstreckt. Das rückwärtige Ende der Welle 10 ist von dem Elektromotor 12 angetrieben, während am vorderen Ende der Welle 10 das Mischorgan 13 befestigt ist. Dieses Mischorgan besteht aus einem mehrflügeligen Propeller, der vorzugsweise als Wendel ausgebildet ist. Bei rotierender Welle 10 erzeugt das mitrotierende Mischorgan 13 eine schräg nach unten gerichtete Flüssigkeitsströmung. An dem Mischorgan 13 sind mehrere Luftaustrittsöffnungen $14_1$ und $14_2$ vorgesehen, die mit dem Luftkanal 11 in Verbindung stehen und die Auslässe des Luftkanals bilden.

An dem Motor 12 ist ein hohles Druckgehäuse 15 befestigt, durch das die Welle 10 abdichtend hindurchgeführt ist. Eine erste Dichtung 16 bewirkt die Abdichtung der Welle 10 in bezug auf das Gehäuse des Motors 12 und eine zweite Dichtung 17 bewirkt die Abdichtung der Welle gegen das äußere Ende des Druckgehäuses 15. In das Druckgehäuse 15 führt eine Luftleitung 18 hinein, die an das Gebläse 19 angeschlossen ist.

Der Motor 12 ist an einer (nicht dargestellten) Halterung derart befestigt, daß die Welle 10 unter einem Winkel a zwischen 35 und 60°, vorzugsweise zwischen 40 und 50°, zur Wasseroberfläche 20 schräg nach unten weist. Dabei befinden sich die Luftaustrittsöffnungen $14_1$ bzw. $14_2$ in einer Tiefe d von vorzugsweise 50 bis 120 cm, insbesondere von 70 bis 100 cm, unterhalb der Wasserfläche 20.

Der Druck, den das Gebläse 19 in die Druckkammer 15 liefert, gelangt über eine Öffnung 21 der Welle 10 in den Luftkanal 11. Dieser Druck ist um 20 bis 30 mbar geringer als der Wasserdruck in der Tiefe D. Die Druckluft treibt bei stillstehender Welle 10 das Wasser aus dem Luftkanal 11 heraus, mit Ausnahme einer kleinen Wassersäule von 20 bis 30 cm Höhe am unteren Ende. Wenn der Motor 12 in Betrieb gesetzt wird und das Mischorgan 13 rotiert, wird durch den entstehenden Sog diese kleine Wassersäule aus dem Luftkanal 11 herausgezogen und außerdem wird Luft aus dem Luftkanal in das Abwasser hineingesaugt.

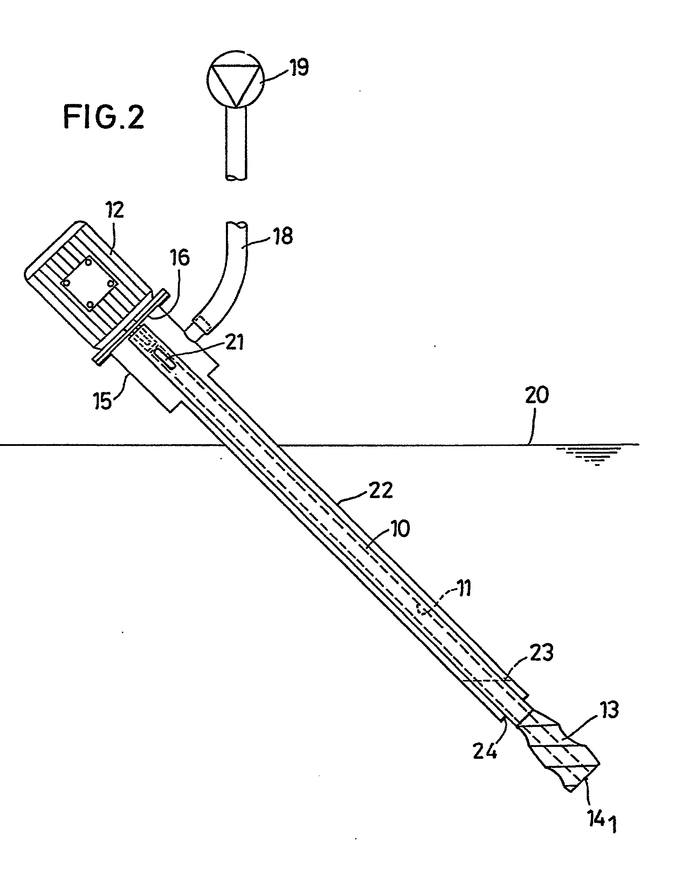

Den übrigen Ausführungsbeispielen, die in den Fign. 2 bis 4 dargestellt sind, liegt das gleiche Prinzip zugrunde, wie dem Ausführungsbeispiel der Fig.

1. Daher ist die nachfolgende Beschreibung der Fign. 2 bis 4 im wesentlichen auf die Darstellung der Unterschiede gegenüber Fig. 1 beschränkt.

Bei dem Ausführungsbeispiel der Fig. 2 ist das dem Mischorgan 13 zugewandte Ende des Druckgehäuses 15 nicht durch eine mechanische Dichtung gegenüber der Welle 10 abgedichtet, sondern durch einen die Welle 10 mit radialem Abstand umgebenden Mantel 22, der sich an das Druckgehäuse 15 anschließt und in dem der von dem Gebläse 19 erzeugte Luftdruck herrscht. Da dieser Luftdruck nur geringfügig kleiner ist als das Gewicht der Wassersäule, die auf das vordere Ende des Mantels drückt, dringt Wasser nur in das vordere Ende des Mantels hinein, so daß sich dort eine Wasserfläche 23 ausbildet. Durch den Wasserverschluß in der Nähe des vorderen Wellenendes wird erreicht, daß die Welle 10 nahezu vollständig in Luft rotiert, so daß die Reibungsverluste gering gehalten werden. Ein weiterer Vorteil besteht darin, daß im Abstand vom Motor 12 keine mechanische Dichtung vorgesehen ist, die eine genaue Zentrierung der Welle erforderlich machen würde. Kleine Ausrichtfehler der Welle 10 haben keine nachteiligen Folgen auf die Abdichtung.

Der von dem Gebläse 19 gelieferte Druck erzeugt auch in dem Luftkanal 11 eine Luftsäule, die ebenfalls durch einen Wasserspiegel in Höhe des Wasserstandes 23 nach unten begrenzt ist.

Wenn der Schraubenbelüfter nach Fig. 2 in Betrieb gesetzt wird, d.h., wenn der Motor 12 eingeschaltet wird, wird durch die Drehung des Mischorgans 13 eine Wasserströmung erzeugt, die Luft aus der zentralen Öffnung $14_1$ mitreißt. Hierbei braucht nur derjenige Gegendruck überwunden zu werden, der der Wasserhöhe zwischen der Öffnung $14_1$ und dem Wasserstand 23 entspricht. Durch die Drehung des Mischorgans 13 wird auch Luft aus dem Mantel 22 heraus angesaugt. Es kann zweckmäßig sein, das untere Ende 24 des Mantels 22 so auszubilden, daß dieses Ende 24 die Welle 10 relativ eng umschließt, um eine Drosselstelle zu bilden. Damit kann sichergestellt werden, daß der überwiegende Anteil der Luft nicht aus dem Ende 24, sondern aus der Öffnung $14_1$ austritt. Seitliche Öffnungen $14_2$ sind bei dem Mischorgan 13 nach Fig. 2 nicht vorhanden.

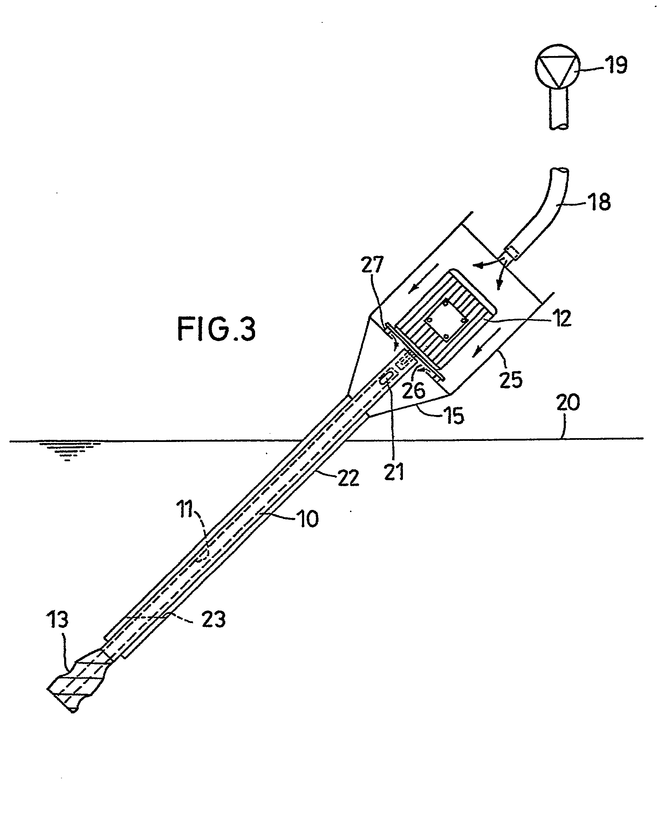

Das Ausführungsbeispiel der Fig. 3 gleicht weitgehend demjenigen von Fig. 2, mit der Ausnahme, daß die Leitung 18 nicht direkt in das Druckgehäuse 15 einmündet, sondern in ein Gehäuse 25, das den Motor 12 umgibt. Das Gehäuse 25 ist mit dem Druckgehäuse 15 und dem Motor 12 fest verbunden. Durch eine Öffnung 26, durch die die Welle 10 von dem Gehäuse 25 in das Druckgehäuse 15 ragt, strömt die Druckluft in das Druckgehäuse. Die Leitung 18 mündet in die rückwärtige Stirnwand des Gehäuses 25. Die Druckluft umströmt den Motor 12, der hierdurch gleichzeitig gekühlt wird, und gelangt durch die Öffnung 26 in das Druckgehäuse 15 und von dort einerseits in das Innere des Mantels 22 und andererseits durch die Öffnung 21 in den Luftkanal 11. Der Motor 12 ist an der die Öffnung 26 enthaltenden Wand über Stützfüße 27 montiert, zwischen denen die Luft hindurchströmen kann.

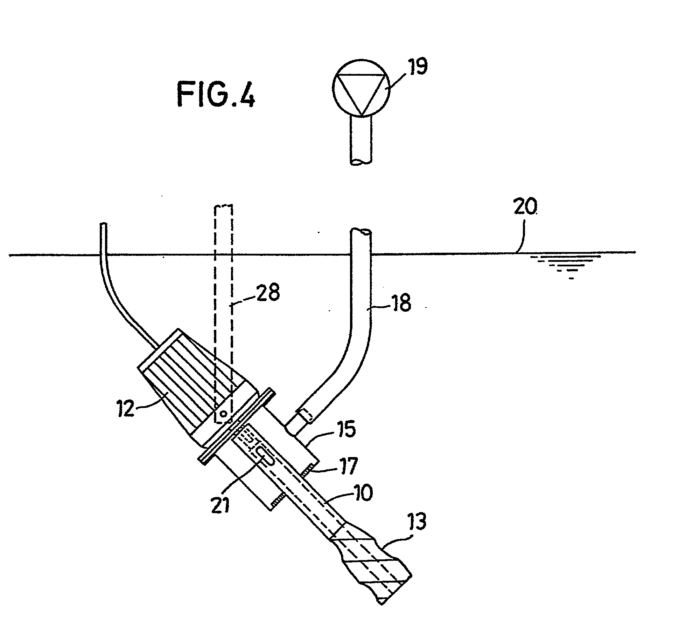

Das Ausführungsbeispiel von Fig. 4 gleicht demjenigen von Fig. 1, jedoch ist der Motor 12 nach Fig. 4 nicht oberhalb der Wasserfläche 20 angeordnet, sondern als Tauchmotor ausgebildet, der an einer Halterung 28 im Wasser montiert ist. Dies ermöglicht die Verwendung einer kurzen Welle 10. Da bei einer kurzen Welle die Gefahr von Taumelbewegungen gering ist, kann die Abdichtung des Druckgehäuses 15 mit einer mechanischen Dichtung 17 erfolgen, die die Welle 10 umgibt.

Das Gebläse 19 ist in der Regel über Wasser angeordnet und durch die Leitung 18 mit dem Inneren des Druckgehäuses 15 verbunden.

## Patentansprüche

1. Verfahren zum Betrieb eines Schraubenbelüfters für die Abwasserbegasung, der eine von einem Motor (12) angetriebene Welle (10), die schräg in das zu begasende Abwasser ragt und an ihrem Endbereich ein Mischorgan (13) trägt, einen längs der Welle (10) verlaufenden, an dem Mischorgan (13) austretenden Luftkanal (11) une ein an den Luftkanal angeschlossenes Gebläse (19) aufweist, dadurch gekennzeichnet, daß die Eintauchtiefe des Mischorgans (13) mindestens 50 cm beträgt und daß das Gebläse (19) einen Druck liefert, der um etwa 0 bis 35 mbar niedriger ist als der auf den Auslaß ($14_1$, $14_2$) des Luftkanals (11) einwirkende Wasserdruck.

2. Verfahren nach Anspruch 1, dadurch gekennzeichnet, daß die Eintauchtiefe des Mischorgans (13) mindestens 70 cm beträgt.

3. Verfahren nach Anspruch 1 oder 2, dadurch gekennzeichnet, daß als Gebläse (19) ein schnell laufendes einstufiges Hochdruckgebläse verwendet wird.

4. Verfahren nach Anspruch 1 oder 2, dadurch gekennzeichnet, daß als Gebläse (19) ein mehrstufiges Radialgehäuse verwendet wird.

5. Verfahren nach einem der Ansprüche 1 bis 4, dadurch gekennzeichnet, daß die Welle (10) mit radialem Abstand von einem Mantel (22) umgeben wird, der unmittelbar vor dem Mischorgan (13) endet und der an das Gebläse (19) angeschlossen wird.

6. Verfahren nach Anspruch 5, dadurch gekennzeichnet, daß das vordere Ende des Mantels (22) zur Verhinderung des Absaugens von Luft durch das Mischorgan (13) aus dem Mantel die Welle (10) eng umschließt.

7. Verfahren nach einem der Ansprüche 1 bis 6, dadurch gekennzeichnet, daß der Motor (12) von einem Gehäuse (25) umgeben ist, das an einem Ende mit dem Gehäuse (19) und am anderen Ende mit einer Einlaßöffnung (21) des Luftkanals (11) in Verbindung steht.

8. Verfahren nach einem der Ansprüche 1 bis 7, dadurch gekennzeichnet, daß als Motor (12) ein unter der Wasserfläche montierbarer Tauchmotor verwendet wird.

## Claims

1. A method for operating a helical impeller aerator for waste water aeration, said helical impeller aerator having a shaft (10) driven by a motor (12), which shaft obliquely protrudes into the waste water to be aerated and carries a mixing member (13) at its end section, an air channel (11) extending along said shaft (10) and opening at the mixing member (13), and a blower (19) connected to the air channel (11), characterised in that the submerging depth of said mixing member (13) is at least 50 cm and that said blower (19) provides a pressure being lower by about 0 to 35 mbar than the water pressure exerted on the outlet ($14_1$, $14_2$) of said air channel (11).

2. The method according to Claim 1, characterised in that the submerging depth of said mixing member (13) is at least 70 cm.

3. The method according to Claim 1 or 2, characterised in that said blower (19) is a high-speed one-staged high pressure blower.

4. The method according to Claim 1 or 2, characterised in that said blower (19) is a multi-staged radial blower.

5. The method according to one of Claims 1 to 4, characterised in that said shaft (10) is surrounded by a jacket (22) at a radial distance, which jacket ends immediately before said mixing member (13) and is connected to said blower (19).

6. The method according to Claim 5, characterised in that the front end of said jacket (22) tightly encloses said shaft (10) so as to prevent the mixing member (13) from sucking air out of said jacket.

7. The method according to one of Claims 1 to 6, characterised in that said motor (12) is surrounded by a casing (25) which at one end is connected to said blower (19) and at the other and to an intake opening (21) of said air channel (11).

8. The method according to one of Claims 1 to 7, characterised in that said motor (12) is a submerging motor mountable below the water surface.

## Revendications

1. Procédé d'exploitation d'un aérateur à hélice pour l'aération de l'eau usée, qui comporte un arbre (10), entraîné par un moteur (12), qui pénètre obliquement dans l'eau usée à aérer et porte dans sa zone d'extrémité un organe de mélange (13), un canal d'air (11) dirigé le long de l'arbre (10) et sortant à l'organe de mélange (13) et un ventilateur (19) relié au canal d'air, caractérisé en ce que la profondeur de plongée de l'organe de mélange (13) atteint au moins 50 cm et en ce que le ventilateur (19) fournit une pression qui est d'environ 0 à 35 mbars inférieure à la pression d'eau agissant sur la sortie ($14_1$, $14_2$) du canal d'air (11).

2. Procédé selon la revendication 1, caractérisé en ce que la profondeur de plongée de l'organe de mélange (13) atteint au moins 70 cm.

3. Procédé selon la revendication 1 ou 2, caractérisé en ce que comme ventilateur (19) on emploie un ventilateur haute pression monoétagé à rotation rapide.

4. Procédé selon la revendication 1 ou 2, caractérisé en ce que comme ventilateur (19) on emploie un ventilateur radial à plusieurs étages.

5. Procédé selon l'une des revendications 1 à 4, caractérisé en ce que l'arbre (10) est entouré, à une certaine distance radiale, par une enveloppe (22) qui se termine immédiatement en avant de l'organe de mélange (13) et qui est reliée au ventilateur (19).

6. Procédé selon la revendication 5, caractérisé en ce que l'extrémité avant de l'enveloppe (22) enserre étroitement l'arbre (10) pour empêcher l'aspiration de l'air hors de l'enveloppe sous l'action de l'organe de mélange (13).

7. Procédé selon l'une des revendications 1 à 6, caractérisé en ce que le moteur (12) est entouré d'une chambre (25) qui est reliée, à une extrémité, au ventilateur (19) et, à l'autre extrémité, à une ouverture d'entrée (21) du canal d'air (11).

8. Procédé selon l'une des revendications 1 à 7, caractérisé en ce que comme moteur (12) on emploie un moteur immergé qui peut se monter sous la surface de l'eau.

FIG.1

FIG.2

FIG.3

FIG.4